Europäisches Patentamt

**European Patent Office**

Office européen des brevets

(19)

(11) Publication number: **0 099 342**

**A1**

(12)

# EUROPEAN PATENT APPLICATION

(21) Application number: **83830140.6**

(22) Date of filing: **11.07.83**

(51) Int. Cl.³: **B 29 H 3/08**
**B 29 H 5/00**

(30) Priority: **12.07.82 IT 2235682**

(43) Date of publication of application:
**25.01.84 Bulletin 84/4**

(84) Designated Contracting States:
**AT CH DE FR GB LI NL SE**

(71) Applicant: **RUTIL S.r.l.**
**Via Raffaello Sanzio**
**Lonate Ceppino(IT)**

(72) Inventor: **Coscia, Giovanni A.**
**Via Casluncio, 16**
**Varese(IT)**

(74) Representative: **Adorno, Silvano et al,**
**c/o SOCIETA' ITALIANA BREVETTI S.p.A. Via Carducci, 8**
**I-20123 Milano(IT)**

(54) **Improved press for rubber moulding.**

(57) A horizontal or vertical moulding press for rubber, of the injection type or not, comprises an oil-operated pressure multiplier device having effect on the movable half-mould. Thus such a force is exerted on the latter as to resist the high pressure produced in the mould during the injection and curing of the rubber. The pressure-multiplier, of the cylinder-piston type, is connected with the oleodynamic circuit of the press and has a multiplying ratio from 1.5 to 20.

FIG. 1

EP 0 099 342 A1

0099342

"IMPROVED PRESS FOR RUBBER MOULDING"

The present invention relates to an improved press for rubber moulding, in particular comprising a pressure multiplier on the moving half-mould.

It is known that usually in a rubber moulding press, both of the horizontal and of the vertical type, either injection- or compression-operating, the pressure reaches values from a minimum of 400 up to 3,000 kg/cm$^2$ during the whole time of the curing process. On the contrary in the moulding of plastic materials the cooling is almost instantaneous, as it occurs in some locations of the mould substantially at the same time of the injection and much lower values of pressure are achieved.

Nevertheless, moulding presses have been hitherto adopted for rubber, being substantially similar to those suitable for the plastic materials, by making use of e.g. toggles or movable spacers, preferably with the aid of a pressurized oil chamber between the rear wall of the moving half-mould and the member for transmitting the thrust of the half-mould to the gripping means (movable spacer or toggle), which in turn discharges such a thrust onto the machine base. This oil-pressurized chamber has the function of balancing the pressure that is inside the press and has the tendency to cause the moving half-mould to open, by reducing to zero the unavoidable clearance or slack existing between said half-mould and the adjacent spacer member.

It is known that if the oil pressure in said chamber is not enough to balance the thrust being imparted by the rubber and tending to cause the half-mould to open even at the first instants of the injection and moulding process when the rubber is still fluid, the article is not moulded in the best way, as it shows at least flashes due to the travel, always occurring even though very small, of the half-mould until taking up the above-mentioned slack. In fact oil is fed to the balancing chamber at a pressure of about 140/190 atm., a supplied by the same system of oleodynamic jacks for the press.

It is self-evident that this pressure is clearly lower than that arising inside the mould, thereby the formation of flashes on the rubber moulding cannot be avoided and the latter must then be trimmed and flashed with further costs due to equipment, personnel involved and working time.

On the other hand higher values of pressure of the oil in the balancing chamber cannot be adopted in practice, as considerable problems and difficulties would be had for the pumps, valves, pipes, etc. if pressures of about 2,000 kg/cm$^2$ had to be reached, which are necessary to balance the pressure generated by the rubber in the mould.

Now it has been conceived and is the object of the present invention to provide an improved press comprising a pressure-multiplier device directly within the press itself, such as the same, being fed at a usual pressure value as above indicated in the range of 140-190 atm, is able to supply said balancing chamber with such a pressure to substantially balance the pressure exerted by the rubber inside the mould, without the drawbacks due to the high feed pressure of oil.

The improved press of the present invention, of the type comprising at least an intermediate member or spacer between the moving half-mould and a closure device reacting against the base or bed-plate of the press, is characterized by the fact of comprising, across at least one of said spacers, a pressure-multiplier as a piston means which is fed on one side with oil at the usual pressure of operation of the press oleodynamic system and acting on the other side into a chamber which is also initially fed with oil at the same pressure and communicating with at least a portion of the rear wall of said moving half-mould, there being provided pressurized oil-proof sealing means in the contact surfaces between said moving half-mould and said spacer which are not in communication with said chamber.

According to a particular feature of the present invention, the multiplying ratio of pressure in said chamber being in communication with a portion of the rear wall of the moving half-mould is in the range of 1.5 to 20.

The improved rubber press of the invention will be now described more in detail with reference to the annexed drawings, in which:

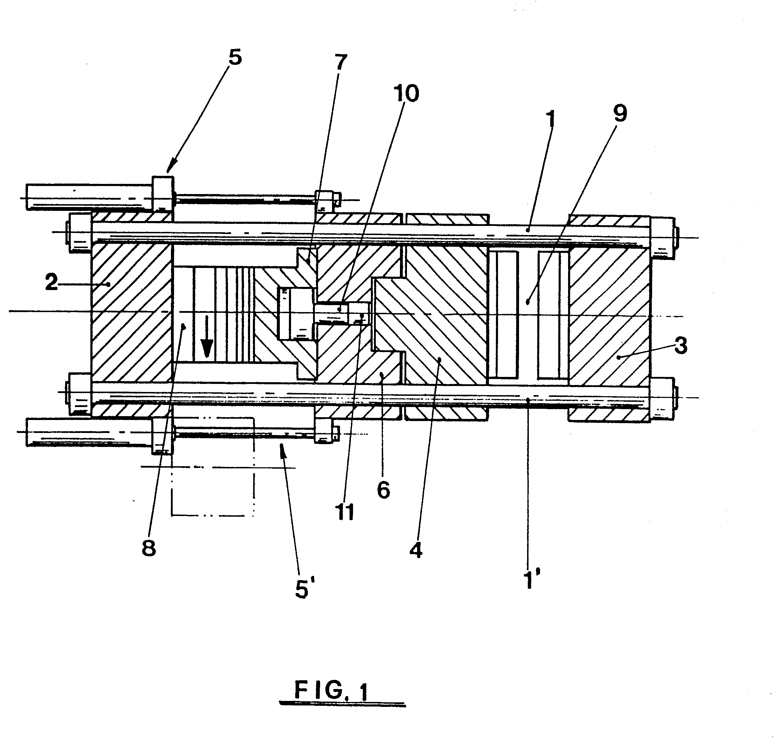

FIGURE 1 shows a longitudinal cross-section view of a column press provided with the multiplier device of the invention; and

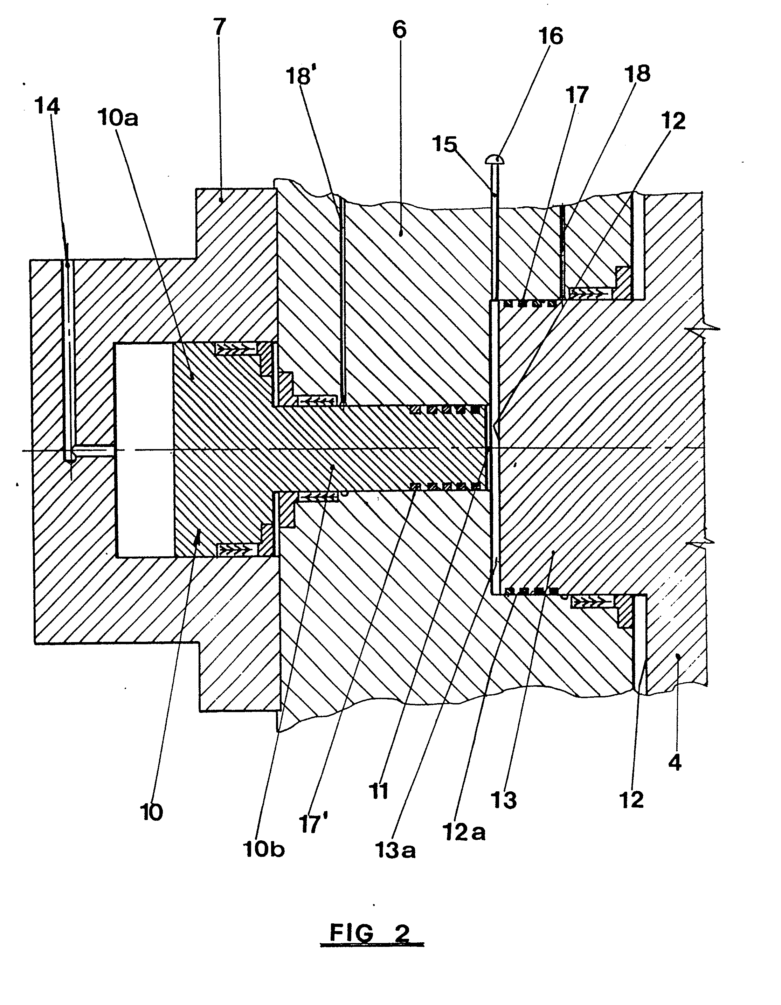

FIGURE 2 shows in a greater scale, the region of the multiplier of Fig. 1.

A base 2 and a stationary half-mould 3 are fixed, respectively on opposite sides to the two columns 1,1' of a press, of the type generally used for rubber moulding, whereas a moving half-mould 4 can slide along columns 1,1' by means of two oil-operated hydraulic jacks 5,5', which act onto an intermediate thrust member 6. Between such a member and the base 2 there is provided a second member or insert plate 7 and a movable spacer 8, in one single piece or formed of a number of stacked disks.

The spacer 8 and the members 6, 7 have not only the function of adjusting the position of the movable half-mould 4, but also of discharging onto the base 2 the expansion force which is generated inside the mould 9 and tends to open the half-mould 4.

As a clearance between the movable half-mould 4 in its correct position and the members or spacers 6,7 cannot be avoided, under the thrust of the opening pressure which may reach within the mould up to 2,000-3,000 $kg/cm^2$ such a clearance is eliminated through a backward stroke, more or less sensible, of the half-mould 4 until this latter comes strictly into contact with the intermediate member 6 and this with 7 and this in turn with the movable spacer which intially is already resting against the base 2 in the position shown with full line, whereas it may be traversed, e.g. to the position shown with dotted and dashed lines, when the mould is open and the half-mould 4 with members 6, 7 are in the back position.

In order to avoid the said stroke due to the opening pressure, according to the present invention the members 6 and 7 are provided with a cavity for the housing of a pressure-multiplier 10 which has the portion 10a of larger cross-section area housed within the member 7 and that of smaller cross-section area 10b slidable in a chamber 11 formed in the member 6 and directly communicating with a central zone of the rear wall 12 of the movable half-mould 4. This latter is preferably formed, at the opposite side with respect to the mould cavity 9, with a central portion 13 which is protruding and complementary to a corresponding recess of the member 6.

The pressure-multiplier 10 is fed, by means of a conduit 14 passing through a part of member 7, with oil at the usual pressure of the oleodynamic system in the press, of the order of 140-190 kg/cm$^2$. On the opposite side of the multiplier 10, namely the chamber 11 and the space 13a between the wall 12, relating to the portion 13 of the half-mould 4, and the corresponding wall portion of the member 6, there is also initially supplied with oil, through the passage 15 formed in the member 6, at the same feed pressure. The passage 15 is closed by a high-pressure valve 16, as within the chamber 11 and in said space 13a upon closure of the valve 16 a pressure from 1.5 to 20 times higher than the feed pressure on the low-pressure side will be produced, owing to the smaller diameter of the cylinder portion 10b in comparison with 10a, that is according to the chosen multiplying ratio. In this way pressures of the order to 2,000 kg/cm$^2$ and more can be achieved, such as to balance, at least partically, the opening pressure arising inside the mould 9 during the injection and curing of rubber, thus avoiding flashes.

A multiplicity of seals in series 17,17', with possible recovery of the oil seepage, especially between the seals at the first positions having to resist the highest pressure, are provided for a good tightness against the high-pressure oil in the chamber 11 and space 13a, in addition to the mentioned valve 16, along the length of wall 12 which is placed laterally to the member portion 13 and indicated in the drawing as 12a and along the end length of portion 10b of the multiplier. The recovered oil is again fed to the main oleodynamic circuit of the machine through suitable passages 18,18' also formed in the member 6.

Possible additions and/or modifications will be made by those skilled in the art to the above described and illustrated embodiment of the press according to the invention without departing from the scope of the invention itself. In particular the multiplier 10 could be housed, both with its low-pressure portion and the high-pressure portion, in a single intermediate member between the moving half-mould 4 and the removable spacer 8, as well as be also applied to presses of different type, in which an opening pressure is generated similar to that of presses for rubber moulding.

- 1 -

C L A I M S

1. Improved press for rubber moulding, comprising- at least an intermediate member or spacer (6, 7) between the moving half-mould (4) and a closure device (8) reacting against the base (2) of the press, characterized by the fact of comprising, across at least a first one of said members (6,7) a pressure-multiplier (10) as a piston means being fed on one side with oil at the usual operation pressure of the press oleodynamic system and acting on the other side into a chamber (11) which is also initially fed with oil at the same pressure and communicates with at least a portion of the rear wall (12) of said moving half-mould, there being provided pressurized oil-proof sealing means (17,17'), about the moving half-mould (4) and said multiplier (10), respectively on either side of said chamber (11).

2. Improved press according to claim 1, wherein said moving half-mould (4) has, on the side opposite to the mould (9), a protruding central portion (13) being coaxial with said pressuremultiplier (10) and said chamber (11), this latter communicating with a space (13a) comprised between said protruding portion (13) and a corresponding central recess zone of said member (6).

3. Improved press according to claim 2, wherein said space (13a) is connected with the general oleodynamic system of the press through a passage (15) formed across said member (6) and closed by a valve (16) capable of resisting pressures of at least 2,000 kg/cm$^2$.

4. Improved press according to claim 2, wherein said sealing means (17) about the moving half-mould (4) are provided along a portion (12a) of said wall (12) which laterally surrounds said protruding portion (13), thus operating between it and the corresponding wall portion of the member (6).

5. Improved press according to one or more of the preceding claims, wherein the ratio between the cross-section areas of the two portions (10a, 10b) of the multiplier (10), which corresponds to the multiplying ratio, is comprised between 1:1.5 and 1:20.

6. Improved press for rubber moulding, comprising a pressure-multiplier therein, substantially as above described and illustrated.

FIG, 1

FIG 2

**European Patent Office**

# EUROPEAN SEARCH REPORT

| DOCUMENTS CONSIDERED TO BE RELEVANT | | | EP 83830140.6 |
|---|---|---|---|
| **Category** | Citation of document with indication, where appropriate, of relevant passages | **Relevant to claim** | **CLASSIFICATION OF THE APPLICATION (Int. Cl. ³)** |
| A | US - A - 4 249 880 (WOHLRAB)<br>* Totality *<br>-- | 1 | B 29 H 3/08<br>B 29 H 5/00 |
| A | GB - A - 706 854 (CAYLA)<br>* Totality *<br>-- | | |
| A | US - A - 3 767 352 (REES)<br>* Totality *<br>-- | | |
| A | US - A - 4 337 022 (LAURENT)<br>* Totality *<br>---- | | |

**TECHNICAL FIELDS SEARCHED (Int. Cl. ³)**

B 29 C 3/00
B 29 F 1/00
B 29 G 3/00
B 29 H 3/00
B 29 H 5/00

The present search report has been drawn up for all claims

| Place of search | Date of completion of the search | Examiner |
|---|---|---|
| VIENNA | 24-10-1983 | MAYER |